(19) Europäisches Patentamt / European Patent Office / Office européen des brevets

(11) **EP 3 285 589 B1**

(12) **EUROPEAN PATENT SPECIFICATION**

(45) Date of publication and mention
of the grant of the patent:
**17.11.2021 Bulletin 2021/46**

(51) Int Cl.:
*A21D 2/18* (2006.01)       *A23L 33/20* (2016.01)
*A21D 13/06* (2017.01)

(21) Application number: **16731371.7**

(22) Date of filing: **22.04.2016**

(86) International application number:
**PCT/NL2016/050286**

(87) International publication number:
**WO 2016/171559 (27.10.2016 Gazette 2016/43)**

(54) **FOOD PRODUCTS WITH REDUCED SUGAR CONTENT**

NAHRUNGSMITTELPRODUKTE MIT VERRINGERTEM ZUCKERGEHALT

PRODUITS ALIMENTAIRES À TENEUR EN SUCRE RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2015 EP 15165118**

(43) Date of publication of application:
**28.02.2018 Bulletin 2018/09**

(73) Proprietor: **Koninklijke Peijnenburg B.V.
5664 HB Geldrop (NL)**

(72) Inventors:
 • **JURGENS, Albertus**
   **2595 DA 's-Gravenhage (NL)**
 • **NOORT, Martijn Willem-Jan**
   **2595 DA 's-Gravenhage (NL)**
 • **RENZETTI, Stefano**
   **2595 DA 's-Gravenhage (NL)**
 • **DE HARDER, Jacobus Rikkert**
   **2595 DA 's-Gravenhage (NL)**

(74) Representative: **V.O.
P.O. Box 87930
Carnegieplein 5
2508 DH Den Haag (NL)**

(56) References cited:
 EP-A1- 1 817 964       WO-A1-2007/001501
 WO-A2-2008/082596    US-A1- 2005 220 961
 US-A1- 2006 051 480

 • **MARTNEZ-CERVERA S ET AL: "Rheological, textural and sensorial properties of low-sucrose muffins reformulated with sucralose/polydextrose", LWT- FOOD SCIENCE AND TECHNOLOGY, ACADEMIC PRESS, UNITED KINGDOM, vol. 45, no. 2, 15 August 2011 (2011-08-15), pages 213-220, XP028319231, ISSN: 0023-6438, DOI: 10.1016/J.LWT.2011.08.001 [retrieved on 2011-09-05]**

Remarks:
The file contains technical information submitted after the application was filed and not included in this specification

EP 3 285 589 B1

**Description**

The invention relates to a method for preparing a baked food product of which the preparation comprises a heating step wherein at least part of the starch is gelatinised. The invention further relates to a batter, a dough and to a baked food product. The invention further relates to the use of a specific combination of carbohydrates other than sugars as a sugar replacer, a sweetener or a bulking agent in a baked food product such as defined by the claims.

Sugars are important ingredients of various food products. They are an important food source and contribute to a sweet flavour of the food product. However, a large demand exists for commercial products with a reduced sugar content, in view of current insights on a negative impact of excessive amounts of sugars, notably sucrose, fructose and glucose, on health. Excessive amounts of sugar intake are for instance considered to contribute to an increased risk of obesity, insulin resistance and type 2 diabetes.

Sweeteners have been proposed to replace sugar. Intense sweeteners, like aspartame, can be used in minute amounts to replace the sweetening effect of sugar, e.g. in beverages or candy. However, unsatisfactory results are obtained when replacing sugar in baked or fried products made from a dough or batter containing starch, wherein sugar is replaced solely with an intense sweetener. In particular, structural/textural properties are inferior.

Sugar alcohols and polyols, for instance sorbitol, have been proposed as alternatives for sugars in the prior art. However, large quantities of sorbitol can cause an undesired laxative effect. In order to address this, EP-A 511 761 proposes a sweetener composition, comprising the sugar alcohols erythriol and sorbitol and a glucose oligomer (a starch hydrolysate) having a DE of 10 to 30. The sugar alcohols form the major component. The sweetener composition is used for sweetening a pie filling or a bakery cream. These products contain pre-gelatinised starch. No examples are given of the use of the sweetener composition in the preparation of a baked or fried product wherein starch is gelatinized in the presence of the sweetener composition.

US 2009/202697 relates to a sweetener composition for use in a beverage or food, *e.g.* a cake. It comprises a mixture of sugar alcohols (erythritol, sorbitol, and at least one of isomalt and maltitol) and at least one ingredient selected from polydextrose and resistant maltodextrin. The sugar alcohols form the major part of the composition. An (average) molecular weight of the polydextrose and resistant maltodextrin is not mentioned in US 2009/202697.

EP 1 817 964 A1 relates to sugar replacement compositions for food applications. The composition comprises a bulking fibre composition, providing a polydextrose, an inulin, an oligofructose or a resistant maltodextrin, and a high intensity sweetener. Optionally a low intensity sweetener is present, e.g. a polyol or a sugar alcohol.

WO 2008/082596 A2 relates to low calorie sweetener compositions comprising erythritol, sorbitol, isomalt and/or maltitol, resistant starch and polydextrose. Applications mentioned in this document include baked goods (e.g. cakes), but also confectionaries, dairy products, cereal bars and the like.

US 2005/220961 relates to a reduced sucrose cookie dough. The dough contains a Saccharide System, comprising at least one of crystalline maltitol, lactitol and isomalt and further at least one of a liquid sugar alcohol and a long chain sugar complex.

WO 2007/001501 relates to sweetener compositions for foods and beverages, comprising erythritol, sorbitol, further at least one of isomalt and maltitol and furthermore at least one of polydextrose and maltodextrin.

Martinez-Cervera et al, LWT -Food Science and Technology, vol 45, no 2, 15 August 2011, pages 213-220 relates to low-sucrose muffins reformulated with sucralose/polydextrose.

Various in-house attempts by the inventors of making resilient low-sugar baked products with a further reduced sugar content resulted in products with unsatisfactory mouthfeel or structure. It thus remains a challenge to formulate starch-containing food products with reduced sugar content, of which food product the preparation comprises *in situ* gelatinisation of starch, without substantially affecting other organoleptic characteristics of such food products, in particular bakery products. Without being bound by theory, the inventors consider that sugar plays a crucial role in the gelatinization of starch in the process of preparing a food product, in particular in baked food products, more in particular in resilient food products, such as bread or cake. They further consider that sugar also plays such a role in other starch-containing food products wherein starch is gelatinized during the preparation of the food product, in particular in the preparation of such food product wherein gelatinization of starch contributes to the formation of a desired (characteristic) structure of the food product, such as in baked food products or other food products comprising a cooking step (as a step to make the product ready for consumption), such as in the preparation of sweet-batter coated food products. The gelatinized starch often contribution to a fixation of the food structure.

There remains a need for providing alternatives to conventionally used sugars in food products of which the preparation comprises a gelatinisation of starch, such as dough based products or batter products. In particular alternatives are desired that have a reduced caloric value or wherein the carbohydrate fraction is more slowly digested, when consumed, or wherein the product has a lower glycemic index. More in particular, there is a need to provide alternatives, which have desirable organoleptic properties, such as texture, structure, mouthfeel, taste, scent, preferably similar to comparable full-sugar products or offer an improvement in an organoleptic property compared to comparable reduced-sugar products, e.g. sugar-free products. A skilled test panel is able to make a comparison between different food products (full-sugar and/or reduced sugar products) taking these aspects into account and is able to judge whether a product has an acceptable quality.

The inventors now found that a specific aspect of sugar plays a role in obtaining a starch-containing food product, wherein starch is gelatinised during a baking step, in particular a resilient dough based product, with desirable organoleptic properties. They further found that it is possible to at least maintain satisfactory organoleptic properties by replacing at least part of the sugar in a reference food product (such as a full-sugar conventional product) by other carbohydrates taking into account this aspect.

Accordingly, the invention relates to a method for preparing a baked food product according to claim 1.

The present disclosure further contains a a method for (re)formulating a baked food product containing starch of which the preparation comprises providing a dough or batter wherein at least part of the starch is gelatinised during a heating step, the food product having a reduced sugar content compared to a corresponding reference food product containing sugar *(sugar being defined as the total of pentoses, hexoses and disaccharides of any two of these)* , the method comprising:

- determining the number average molecular weight of the sugar of which the content is to be reduced in the reference food product;
- selecting one or more bulk-carbohydrates *(bulk-carbohydrates being carbohydrates that are at least substantially soluble in water and typically being molecules having a degree of polymerisation in the range of 1-15)* different from the sugar to be replaced, for replacing at least a substantial part of the sugar present in the reference food product;
- and formulating the food product on the basis of the ingredients of the reference food product with the proviso that at least a substantial part of the sugar is replaced by the selected one or more bulk-carbohydrates and wherein the one or more bulk-carbohydrates are formulated in an effective amount whereby the number average molecular weight of the total of bulk-carbohydrate, including sugar (if present), is essentially the same as the number average molecular weight of the sugar in the reference product or deviates at most +/- 20 %, preferably at most +/- 10 %, in particular at most +/- 5 % from the number average molecular weight of the sugar in the reference product.

Further, the invention relates to a dough or batter according to claim 11.

The invention further relates to a baked food product according to claim 15.

The invention further relates to the use of a combination of at least a first bulk-carbohydrate and at least a second bulk-carbohydrate according to claim 21.

As illustrated in the examples, replacement of part of a sugar (sucrose) in a resilient baked product (cake) with only a bulk carbohydrate having a lower molecular weight than sucrose or only a bulk carbohydrate having a higher average molecular weight (Mn) resulted in an adverse effect on one or more properties. By a combination of a polyol (sorbitol or glycerol) and a carbohydrate with a higher Mn than sucrose (a fructooligosaccharide or a polydextrose, in effective amounts whereby Mn of total bulk carbohydrates remained essentially the same (about 342 g/mol) it was found possible to formulate a food product with satisfactory performance on relevant parameters, such as indicated in the Examples.

The substances present in a product of the invention or used in accordance with the invention are typically traditional food ingredients (such as milk, milk-products, eggs, edible plant materials, e.g. fruits, flours or isolated substances of various plants, milk or eggs) GRAS (Generally Recognised As Safe, by the FDA in the USA) and/or approved by the European Food Safety Authority. Herein below reference may be made to the E-number, a code for substances that can be used as food additives for use within the European Union.

As used herein 'Mn' means number average molecular weight. This is one of several well known means to define the average molecular weight of a mixture of compounds of different molecular weight.

Mn is the ordinary arithmetic mean of the molecular masses of the individual molecules. Mn is defined by the following formula:

$$M_n = \frac{\sum_i n_i M_i}{\sum_i n_i}$$

in which

Mi is the molecular weight (g/mol) of compound i

$n_i$ is the number or number fraction of molecules of compound i in a mixture, where $n_i$ can be taken equal to $\frac{w_i}{M_i}$ in which $w_i$ is the weight fraction of compound i in the mixture.

Another average is mass (or weight) average molecular weight given by:

$$M_W = \frac{\sum_i w_i M_i}{\sum_i w_i}$$

in which Mi is the molecular weight (g/mol) of compound *i* and $w_i$ its weight fraction in the mixture.

Yet another way of calculating average molecular weight is the z-average molecular weight ($M_z = [\Sigma_i n_i M_i^3]/\Sigma n_i M_i^2$)

It is the inventors finding that Mn of the total of bulk carbohydrates is a relevant feature in obtaining a food product, containing gelatinised starch, with desirable properties as described herein.

The Mn of (bulk) carbohydrates in a product comprising different carbohydrates can be calculated on the basis of an analysis by High-Performance Anion-Exchange Chromatography with Pulsed Amperometric Detection (HPAEC-PAD). The skilled person will know how to perform the sample preparation and the method of chromatography, based upon common general knowledge and the information disclosed herein. In particular, use can be made of the methodology as provided by Dionex (Thermo Scientific), and described in Technical Note 20 (©2004) or the literature cited therein of which the contents with respect to the analytical methodology is incorporated herein by reference. The technical note is available via internet: http: //www.dionex.com/en-us/webdocs/5023-TN20_LPN032857-04.pdf. Mono- and disaccharides are preferably determined using a with a 10-μm-diameter polystyrene/divinylbenzene substrate agglomerated with 350-nm quaternary amine functionalized latex column material (CarboPac PA1); oligosaccharides and larger (linear) polysaccharides can be analysed using the same column material as the mono- and disaccharides(CarboPac PA1), or alternatively with a 10-μm-diameter ethylvinylbenzene/divinylbenzene substrate agglomerated with 350-nmquaternary amine functionalized latex column material (CarboPac PA100); and polyols and sugar alcohols with a 8.5-μm-diameter vinylbenzyl-chloride/divinylbenzene macroporous substrate fully functionalized with an alkyl quaternary ammonium group column material (CarboPAc MA1). In case of a single carbohydrate compound, Mn equals the molecular weight, i.e. the Mn of pure sucrose is 342.30 g/mol. Unless specified otherwise, the values of the molecular weight and Mn are given in g/mol.The term "carbohydrates" is used herein for molecules consisting of carbon (C), hydrogen (H) and oxygen (O) atoms selected from the group of polyols, sugar alcohols and saccharides.

Saccharides are carbohydrates that have the chemical formula $C_m(H_2O)_n$ which are at least conceptually composed of one or more pentoses, hexoses or combinations thereof.

The group of sugars consists of monosaccharides and disaccharides. Monosaccharides consist of the group of pentoses (aldopentose, ketopentose) and hexoses (aldohexose, ketohexose). The disaccharides are a dimer of any two of these. The saccharides are preferably at least conceptually composed of one or more hexoses. More preferably the monosaccharides are selected from the group of glucose, fructose, tagatose, xylose and galactose. Evidently, monosaccharides have a lower molecular weight than sucrose. A preferred disaccharide to be replaced in accordance with the invention or for which a combination of carbohydrates according to the invention is a particularly suitable alternative as a (partial) substitute) is sucrose. Another disaccharide of particular interest to be (at least partially) replaced is lactose.

Oligosaccharides are saccharide polymers of relatively short length, i.e. at least conceptually composed of 3-15 monosaccharide units. Preferably, oligosaccharides for use in the present invention are at least conceptually composed of 3-12 monosaccharides, more preferably 3-10 monosaccharide units, in particular of 3-6 monosaccharide units. Thus, characteristically, oligosaccharides have a molecular weight higher than sucrose. Most commercially available oligosaccharides or industrially prepared oligosaccharides are mixtures of oligosaccharides of different size. Generally (commercially available) oligosaccharide mixtures are mixtures that also can contain (small) fractions of mono- and disaccharides, which (slightly) lower the Mn of the mixture).. Thus, in addition to providing a bulk-carbohydrate having a molecular weight higher than sucrose, a (commercial) oligosaccharide mixture used to prepare a product according to the invention may contain a bulk carbohydrate other than sugar having lower molecular weight than sucrose. The Mn of oligosaccharide mixtures, for use in accordance with the present invention, usually is more than 350 g/mol, preferably about 450 g/mol or more, more preferably about 504 g/mol or more. The Mn of such oligosaccharide mixtures will usually be less than 2000 g/mol, in particular 1800 g/mol or less, more in particular about 1000 g/mol or less, preferably about 800 g/mol or less, more preferably about 667 g/mol or less. The oligosaccharide mixtures generally essentially consist of molecules having a molecular weight of less than 10 000 g/mol, in particular of less than 5 000 g/mol, preferably of less than 3000 g/mol, more specifically of less than about 2000 g/mol. An oligosaccharide with a relatively low molecular weight tends to have a higher sweetening effect than a longer oligosaccharide or polysaccharide composed of the same monosaccharide units. Also, the higher the molecular weight, the lower the amount that can be included without increasing Mn to an unacceptably high level. Good results have been achieved with linear oligosaccharides, although in principle the bulk carbohydrate fraction may comprise a branched oligosaccharide.

In addition to fructooligosacharide (FOS) and/or polydextrose, a further oligosaccharide may be present. Preferred oligosaccharides are selected from the group consisting of oligoxyloses (XOS), galactooligosaccharides (GOS), oligoarabinoxylans (AXOS), lactosucroses, raffinoses, stachyoses, dextrins, maltodextrins, glucofibres and cyclodextrins (having a degree of polymerisation of 3-15, preferably of 3-10, more preferably of 3-12, in particular of 3-6). A Preferred mixture of water soluble fibres is a mixture of FOS and GOS.

Fructooligosaccharides are either composed of a terminal glucose and two or more fructose units (Glu-Fru$_n$) or consist of fructose units (Fru$_n$).

The oligosaccharides may either be fully digestible, partially digestible (e.g. resistant maltodextrin) on non-digestible. The term " soluble dietary fibre" is used herein as a general term for water-soluble saccharides which are not fully hydrolyzed into sugars by the endogenous enzymes in the small intestine of humans (i.e. that are not fully digestible). Soluble dietary fibre molecules with a degree of polymerisation of 15 or less, in particular oligosaccharidic soluble fibre with a degree of polymerisation of 3-12, more in particular 3-10, are in particular useful in accordance with the invention. Examples of soluble dietary fibres are polydextroses, soluble glucofibres, FOS (e.g. inulin), GOS, XOS and AXOS. E.g. of FOS and of GOS is has been found that they can be used satisfactorily as one of the replacers for a sugar whilst maintaining satisfactory organoleptic properties, including texture, and they have a low caloric value. Oligosaccharides that are not fully digestible by humans in general, e.g. raffinoses are also examples of soluble fibres that can be used as bulk carbohydrates. Most commercially available dietary fibre products or industrially prepared dietary fibre products are mixtures of saccharides of different size and may include (residual) mono- and/or disaccharides. Dietary fibre for use in accordance with the invention typically has an Mn of more than 350 g/mol, in particular of about 504 g/mol or more, more in particular of about 600 g/mol or more. The Mn of the soluble fibre preferably is less than 1800 g/mol, more preferably about 1000 g/mol or less, even more preferably about 800 g/mol or less, in particular about 667 g/mol or less .. Good results have been achieved with linear soluble fibre, although in principle the bulk carbohydrate fraction may comprise a branched soluble fibre.

Polyols are defined herein as carbohydrates wherein all oxygen atoms are part of a hydroxyl group and having at least three hydroxyl groups (-OH). Hereby a strict definition of polyols is used, excluding compounds comprising a plurality of hydroxyl groups and furthermore one or more functional groups selected from the group of carbonyls, carboxyl groups and ether groups. In general, polyols for use in accordance with the invention have a molecular weight of less than 200 g/mol, in particular in the range of 92-182 g/mol. A polyol is present selected from the group consisting of glycerol erythrithol (E968, molecular weight 122.12), xylitol (E967, molecular weight 152.15), sorbitol (E420, molecular weight 182.17) and mannitol (E421, molecular weight 182.17). These also have a sweetener function, in addition to their use as a contributor to a satisfactory bulk effect (e.g. structure, texture), for instance in combination with a bulk carbohydrate having a higher Mn than sucrose, as an alternative to sucrose.

The term "sugar alcohol" is used herein for derivatives of a sugar, having a plurality of hydroxyl functions and one or more ether functions. Generally, a sugar alcohol has the formula $C_{12}H_{24}O_{11}$. Preferred sugar alcohols are maltitol (E965, molecular weight 344.31), lactitol (E966, molecular weight 344.31) and isomalt (E953, molecular weight 344,31). These also contribute to sweetness of the composition.

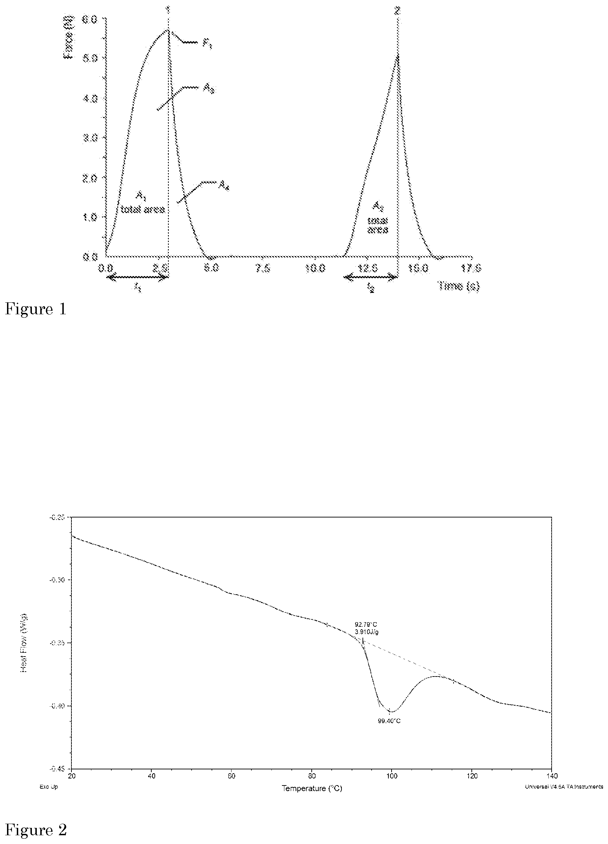

The term "bulk-carbohydrates" is used herein for sugars, polyols, sugar alcohols and other carbohydrates that are at least substantially soluble in water and that are relatively small (generally molecular weight<2250 g/mol), typically being molecules having a degree of polymerisation (DP) in the range of 1-15. Bulk-carbohydrates typically contribute to the bulk of a dough or batter (containing starch) or (a starch containing part) of a food product at least partially made from a dough or batter. The total of bulk-carbohydrates may also be referred to herein as the 'bulk-carbohydrate fraction'. A compound is in particular considered at least substantially soluble in water is it is at least substantially soluble when dispersed in water in a weight to weight ratio of the compound to water of 1:10 at a temperature suitable to gelatinise native starch, i.e. typically at a temperature of about 60-65 °C or more. As the skilled person knows, gelatinisation temperature may be affected by the presence of soluble-carbohydrates, like sugars and other bulk-carbohydrates, of which a higher content typically results in an increase in the minimal temperature needed for gelatinisation to occur, which increase can be substantial, e.g. to about 100 °C. The skilled person will be able to determine this temperature though, based on the information disclosed herein and optionally a limited amount of routine testing, using -Differential Scanning Calorimetry (DSC), e.g. using a TA Instruments Q200 type analyser. Herein about 10 mg of dough is weighed and placed in a pressure pan. The pan is placed in the DSC together with an empty reference pan and equilibrated at 2°C for 5 minutes. After equilibration the temperature is increased linearly with a rate of 7.50 °C/min from 2°C till 160°C during which the heat flow to the sample is recorded. Figure 2 presents a typical heat flow curve of a DSC analysis on model dough. The curves generally show a more or less linear base line with a negative peak related to the heat of gelatinization of the starch. The (main) gelatinization peak is analysed using the software of the instrument revealing the onset- and peak temperatures (°C) and heat of gelatinization (J/g).

DSC can also be used to determine the extent of starch gelatinization in a product according to the invention. In the examples a suitable method for determining the extent of starch gelatinization is described.

When referred herein to a replacement, substitute or alternative for a sugar, this should be interpreted as a replacement/substitute of a part of said sugar or all of said sugar respectively an alternative for a part of said sugar or all of said sugar, unless specified otherwise.

The term "or" as used herein is defined as "and/or" unless it is specified otherwise or it follows from the context that it means "either ....or...".

The term "a" or "an" as used herein is defined as "at least one" unless it is specified otherwise or it follows from the context that it should refer to the singular only.

When referring to a noun (e.g. a compound, an additive, etc.) in the singular, the plural is meant to be included, unless it follows from the context that it should refer to the singular only.

In the context of this application, the term "about" means in particular a deviation of 10 % or less from the given value, more in particular 5 % or less, even more in particular 3 % or less.

The term "substantial(ly)" or "essential(ly)" is generally used herein to indicate that it has the general character or function of that which is specified. When referring to a quantifiable feature, these terms are generally used to indicate that it is for more than 50 %, in particular for at least 75 %, more in particular at least 90 %, even more in particular at least 95 % of the maximum that feature. When referring to 'at least a substantial part', this generally means at least 10 %, in particular at least 25 %, more in particular at least about 50 % to 100 %.

The term 'essentially free' is generally used herein to indicate that a substance is not present (below the detection limit achievable with analytical technology as available on the effective filing date) or present in such a low amount that it does not significantly affect the property of the product that is essentially free of said substance or that it is present in such a low amount (trace) that it does not need to be labelled on the packaged product that is essentially free of the substance.

The food product according to the invention, respectively the mixture used to make a food product in accordance with the invention comprises starch. The starch is usually for more than 50 %, in particular 90-100 % provided by a flour, e.g. wheat starch can be provided as the major component of wheat flour, but may also be provided as a refined ingredient called wheat starch, or mixture thereof.

The starch is usually selected from the group consisting of cereal starches (e.g. wheat, rye, maize, rice, barley, sorghum, millet, oats) tuber starches (e.g. potato), roots (e.g. tapioca/ cassava), starch from pulses (e.g. soy), and starch from pseudocereals (e.g. buckwheat, quinoa). Preferably, the food product comprises a starch selected from the group of root starches, in particular tapioca; tuber starches, in particular potato; and cereal starches, in particular at least one of wheat starches, rye starches, rice starches and maize starches. Preferably the starch component of the food product or mixture for preparing the food product essentially consists of one or more of these starches. Good results have been achieved with a food product wherein the starch component essentially consists of one or more cereal starches (rye, wheat). In a further preferred embodiment, the starch component essentially consists of cereal starch and potato starch. As described elsewhere herein, the starch is gelatinised in a heating step during preparation of a food product by a method according to the invention. Thus, as will be understood by the skilled person, in a dough or batter, the starch is typically at least substantially non-gelatinised prior to the heating step during which gelatinisation takes place. Thus, at least a substantial part, preferably essentially all of the starch in the dough, or batter is typically native starch, prior to the heating.

The starch content in a (ready-to-consume) food product or a mixture for preparing a food product in accordance with the invention (such as a dough, batter or an instant food product for preparing the batter or dough) is at least 10 wt. %, based on total dry weight of the product, in particular in the range of 15-90 wt. %, more in particular in the range of 20-50 wt. %. Starch contents can be based on known formulations for existing food products. *E.g.* extruded snacks (*e.g.* churros) can have a starch content of up to about 90 wt. %. Cake generally has a relatively low starch content, preferably of about 15 wt. %. to about 25 wt. %., in particular of about 20 wt. %.

The food product, dough, or batter usually has a bulk-carbohydrate content in the mixture of 5- 75 wt. %. Typical and preferred contents depend on the type of product (or recipe to be reformulated. In general, a bulk-carbohydrate content in the mixture of 15 - 70 wt. %, in particular of 20 - 60 wt.%, more in particular of 30-55 wt. %, based on dry matter, is preferred. *E.g.* for a cake, a bulk-carbohydrate content of about 30 to about 35 wt. wt. %, based on dry matter is much preferred in a specific embodiment.

Replacement of a small part of the sugar in a known formula for a food product, typically at least 10 %, has already been found to offer an advantage, at least in some embodiments. Usually 20-100 wt. %, preferably 25-95 wt. %, in particular 50-90 wt. %, more in particular 60-85 %, based on total bulk-carbohydrate, is formed by bulk-carbohydrates other than sugars, i.e. bulk-carbohydrates being selected from the group consisting of polyols, sugar alcohols, oligosaccharides and soluble dietary fibre. Suitable ratio's between the different bulk carbohydrates can be determined based on the desired Mn of the bulk carbohydrates in the product (which can e.g. determined on the basis of the Mn of the sugar that is to be replaced from a conventional recipe) and the Mn of the respective bulk carbohydrates that are to be used. It is also possible to replace part of a first sugar, e.g. sucrose, by another sugar. E.g. sucrose or another disaccharide may partially be replaced by a monosaccharide and for another part by a bulk-carbohydrate having a higher Mn than the molecular weight of the disaccharide, thereby maintaining the Mn of the total bulk-carbohydrate fraction at a desired value. Although, such replacement does not have a significant effect on caloric value of the food product, this can be useful in combination with a bulk carbohydrate selected from the group of soluble dietary fibre, namely fructooligosaccharide or polydextrose, having an Mn higher than the molecular weight of sucrose, to maintain a Mn of total bulk-carbohydrate that is about the same as the molecular weight of sucrose or other disaccharide that is to be replaced. Likewise, sucrose or another disaccharide can be used to replace monosaccharide, in combination with the bulk-carbohydrate having a lower molecular weight than the monosaccharide, in particular erythritol or glycerol. In view of a limited solubility, erythriol, which has a low caloric value, is in particular useful to be used in combination with another bulk carbohydrate having a lower molecular weight than the sugar it replaces, if the amount of sugar that is to be replaced is relatively large. Glycerol has about the same caloric value as sucrose, but has a different effect on health aspects, like glycemic index, and is highly soluble in water. In particular in combination with the soluble dietary fibre as a second bulk carbohydrate, as presently claimed, it also is very useful to formulate a product with a reduced caloric value, compared to a full-sugar product.

. By combining the bulk carbohydrates in suitable ratios the Mn can be fine-tuned to a desired Mn, in particular to about the molecular weight of sucrose or lactose, (molecular weight 342.30), to about the molecular weight of fructose or glucose (Molecular weight 180.16) or to the Mn of any mixture of two or more of these sugars. The oligosaccharidein this embodiment preferably is a saccharide-mixture having a number average molecular weight in the range of 400-1800 g/mol, more preferably in the range of 450-1000 g/mol, in particular in the range of 470-800 g/mol.

In particular, good results have been achieved with a combination of a first bulk carbohydrate selected from the group of sorbitol, glycerol and xylitol, and a second bulk carbohydrate selected from the group of FOS and polydextrose, as a replacement of at least part of a disaccharide (sucrose). Such combination is in particular useful as an alternative to sucrose, especially in a resilient food product such as a cake or a bread.

In a preferred embodiment, in particular in a cake, bread or other resilient dough based product, a polyol and at least one bulk carbohydrate selected from the group of oligosaccharides and water soluble fibres is present, wherein the bulk-carbohydrate content is as follows:

- 0-90 %, preferably 10-75 wt. %, more preferably 20-50 wt. % sugars, based on total bulk-carbohydrate
- 3-50 wt. %, preferably 4-30 wt. %, more preferably 5-25 wt. % of one or more bulk carbohydrates having a lower molecular weight than sucrose (including one or more polyols having a molecular weight of less than 200 g/mol), based on total bulk-carbohydrate
- 3-97 wt. %, preferably 10-60 wt. %, more preferably 15-50 wt. %, in particular 20-40 wt. % of one or more bulk carbohydrates having a higher molecular weight than sucrose (including fructooligosaccharide and/or polydextrose),, based on total bulk carbohydrate.

Good results have been achieved with a baked product, such as a cake or a sweet bread, wherein the (total) content (in wt. %) of the bulk carbohydrate(s) having a higher molecular weight than sucrose (oligosaccharides) is higher than the (total) content of bulk carbohydrate(s) having a lower molecular weight than sucrose (polyols with molecular weight of 200 g/mol or less). Such embodiment is in particular useful for a product wherein the Mn of the bulk-carbohydrate fraction is relatively high, in particular more than 250 g/mol, preferably at least about 280 g/mol, more preferably at least about 300 g/mol.

In a specific embodiment, the contents of the bulk carbohydrate(s) having a higher molecular weight than sucrose (oligosaccharides) and the (total) content of bulk carbohydrate(s) having a lower molecular weight than sucrose (polyols with molecular weight of 200 g/mol or less) are about the same.

In a further specific embodiment, the content of bulk carbohydrate(s) having a higher molecular weight than sucrose (oligosaccharides) is lower than the (total) content of bulk carbohydrate(s) having a lower molecular weight than sucrose (such as polyols with molecular weight of 200 g/mol or less). Such embodiment is particularly useful to reformulate a product into a product with a reduced monosaccharide content, such as a reduced-fructose or reduced-glucose content. In an embodiment providing a product with a reduced monosaccharide content, preferably the bulk-carbohydrate content is as follows:

- 0-90 %, preferably 10-75 wt. %, more preferably 20-50 wt. %, in particular 20-45 wt. % sugars, based on total bulk-carbohydrate
- 25-50 wt. , in particular 30-50 %of one or more bulk carbohydrates having a lower molecular weight than sucrose , in particular one or more polyols having a molecular weight of less than 200 g/mol, based on total bulk-carbohydrate
- 2-25 wt. %, preferably 3.5-15 wt.. % of one or more bulk carbohydrates having a higher molecular weight than sucrose, in particular one or more oligosaccharides (water-soluble fibre and/or digestible oligosaccharides), based on total bulk carbohydrate.

Further, the food product, dough or batter may comprise any further food ingredient suitable for the (intended) product. Such ingredients are generally known in the art, and can be formulated based on known recipes for a particular food product. Typical further ingredients can amongst others be selected from the group of fats (solid or liquid, animal or vegetable), proteins (e.g. from vegetable, eggs, milk), flavouring, aroma's, salt, leavening agents (e.g. yeast, baking soda), colourant, thickening agents (e.g. pectins or gums having a DP larger than 15), dietary fibre other than dietary fibre qualifying as bulk-carbohydrate (e.g. non-soluble dietary fibre, such as cellulose).

If desired, a high-intensity sweetener can be included. High-intensity sweetener have a much higher sweetening effect per gram than sugar, to the extent that they are typically used in such a low amount that they do not substantially contribute to the bulk (structure, textures) of the food product or mixture from which the food product is made. As a rule of thumb, they have a sweetening intensity that is at least about 30 times as high as sucrose, and typically in the range of 100-1000 times as high. The sweetness is measured by a taste panel by comparing solutions of different compounds with a solution of sucrose of typically 5-10% (w/w). The concentration of compound in solution to obtain an iso-sweet perception as judged by the panel compared to the sucrose solution can be used to calculate the sweetness index in which sucrose = 1. Apart from intensity, quality of the sweetness perception may be evaluated. To mimic the taste quality of a specific sugar, e.g. sucrose, often a combination of sweeteners is used.

If present, the high-intensity sweeteners is usually selected from stevia, aspartame, sucralose, neotame, acesulfame potassium (Ace-K), saccharin, and advantame. Another example of a high-intensity sweetener is a cyclamate. The use of a high-intensity sweetener is in particular desired if the bulk-carbohydrates other than sugar together have a lower sweetening effect than desired, e.g. because the sugar they replace generates more sweetness, and it is desired that such sweetness is maintained.

A method for preparing the baked food product according to the invention comprises a heating step. The heating step is carried out at a temperature and for a duration at which at least a substantial part of the starch, preferably essentially all of the starch is gelatinised. A heating step wherein starch is gelatinised is popularly also referred to as cooking, regardless the heating technique. In a food product of the invention, the gelatinised starch typically contributes to the structure of the food product. Suitable heating techniques and conditions can be selected based on common general knowledge regarding suitable preparation (cooking) techniques for a specific product of interest and the information disclosed herein. Suitable heating conditions can be determined with Dynamic Mechanical Thermal Analysis (DMTA) using a Rheometer equipped with a temperature control chamber. In practice, this may be used as a screening tool to select suitable heating conditions for a dough or batter with a specific bulk-carbohydrate mixture (leavening agents, which may be present in the final formulation for a product of interest, may be omitted during this screening). Further modification of the heating conditions can be made, using full heating testing in a conventionally used heating system (e.g. oven) and sensory evaluation by a skilled artisan (using dough/batter with all ingredients intended to be in the final formulation).

At least at the start of the heating step in a method for preparing a food product of the invention, the dough or batter that is subjected to gelatinisation should contain sufficient water to allow full or partial gelatinization, e.g. at least about 0.8 g water per gram starch, preferably more than 1 gram water per gram starch. The upper limit of the water content is usually dependent on the type of product that is made. The skilled person will be able to determine a suitable upper limit for a specific mixture to be subjected to gelatinisation based on common general knowledge, the information disclosed herein and optionally a limited amount of routine testing.

Good results have been achieved with a baking process. Preferably, the heating step includes heating to a temperature of at least 110 °C, in particular to a temperature in the range of 110-250 °C. Such a high temperature is not necessarily required to gelatinise the starch, but can contribute to other changes in organoleptic properties. A relatively high temperature may be desirable to impart specific colouring, flavour (due to Maillard reactions) or texture effects (crustiness, crispiness). Suitable temperatures are generally known in the art to achieve this.

Conventional formulations for dough-based product, typically prepared by baking, generally prescribe sucrose as a sweetener (plus acting as a bulk-carbohydrate), optionally in combination with another sugar. In most formulations sucrose is the major or only sugar (> 50 wt. %, in particular 90-100 wt.%). However, some specialty products, contain monosaccharides as the major sugar, e.g. provided by honey, glucose syrup, fructose syrup, molasses. E.g. ginger bread, conventionally contain fructose and/or glucose as the major sugar. Cake recipes exist with glucose as the major sugar. The invention provides an alternative for high-sucrose formulations, by providing a formulations wherein at least a substantial part, typically at least 25 % of the total bulk-carbohydrate content is provided by one or more bulk-carbohydrates other than sugar, preferably by two or more bulk-carbohydrates other than sugar.

The total of bulk-carbohydrates has an Mn of 250- 400 g/mol, in particular of 250-390 g/mol. Preferably, the total of bulk-carbohydrates in the mixture has a number average molecular weight of 250-360 g/mol, more in. A relatively high Mn, such as an Mn of 250-400 g/mol, in particular of 300-350 g/mol is in particular advantageous in case the bulk-carbohydrate other than sugar is used as an alternative solely or primarily to sucrose, lactose or another disaccharide.. In case the bulk-carbohydrate is used as an alternative to a mixture of one or more monosaccharides and one or more disaccharides, the Mn of the bulk-carbohydrate is advantageously matched to about the Mn of the sugar mixture that is replaced.

The invention in particular provides a food product, such as a cake, comprising more than 5.0 wt. % fat (or fat-substitute), although good results have also been achieved with a low-fat food product comprising up to 5.0 wt. % fat..

The food product according to the invention usually is made from a dough or batter that is essentially free of rye flour, or if it contains rye flour, it generally comprises less than 70 wt.% rye flour, based on total flour. However , it is also possible to prepare or formulate products comprising 70 wt. % or more of rye flour, based on total flour.

In a preferred embodiment, the product of the invention is a dough-based food product, conventionally prepared by baking, selected from the group of breads (e.g. brioches, sweet breads); cakes (e.g. sponges, cupcakes) or a doughfor preparing any one of said products. These products all are relatively soft and resilient.

The cake or bread formulation can be based on a recipe of a full-sugar cake, with sucrose, glucose or a mixture thereof as the major sugar component. The bulk-carbohydrate composition to replace the sugar can be determined by first determining the Mn of the sugar that is replaced, thereafter selecting the bulk-carbohydrates other than sugar, in accordance with the claims, and then formulating the bulk-carbohydrates other than sugar in effective amounts to match the Mn of the sugar that is replaced sufficiently close. Good results have been achieved with a combination of a polyol (sorbitol, glycerol) and an oligosaccharidic water soluble fibre (polydextrose, FOS), wherein Mn of the bulk carbohydrates was in the range of about 490-700 g/mol. The ratio polyol to the oligosaccharidic water soluble fibre is preferably in the range of 1:1 to 1:10, in particular in the range of 1:1.5 to 1:6.

Very good results have been achieved with a sponge cake (also known as pound cake), a cake traditionally made from a dough containing flour (usually wheat flour), butter (which may be replaced at least partially by margarine), eggs and sugar (which in accordance with the invention is at least partially replaced), each in about the same amount by weight (traditionally a pound of each). A sponge cakeaccording to the invention is usually made from a dough containing about 20 to about 27 wt. % flour, about 20 to about 27 wt. % bulk-carbohydrate, about 18 to about 25 wt. % whole eggs and about 18 to about 25 wt. % butter, margarine or a combination thereof. Further water may be added (up to about 5 wt. %) and a leavening agent (typically less than about 1 wt. %). Optionally a minor amount of one or more known additives is added, such as starch (up to about 3 wt. %) or sodium acid pyrophosphate (typically less than 1 wt. %).

In a further embodiment, the product is a sweet bread, conventionally sweetened with monosaccharides (glucose, fructose, e.g. provided by honey or molasses) as the major or only sugar component (>50 wt. % monosaccharides).

In a specific embodiment, the food product is a ginger bread. The term 'ginger bread' is used herein for products which are also known as 'ontbijtkoek' or 'peperkoek' in the Netherlands and Belgium. Ginger bread is a baked product made from at least 30 wt. %, based on dry weight, of cereal flour, of which cereal flour at least 70 wt. % is rye flour. Ginger bread contains up to 5.0 wt. %, based on dry weight, fat (triglycerides) and at least 15 wt. %, based on total weight, of water. Ginger bread contains at least 35 wt. %, based on dry weight, bulk-carbohydrate (conventionally fructose as the only or major bulk-carbohydrate). Thus, the Mn of bulk-carbohydrates in ginger bread is less than 250 g/mol and usually about the same as the molecular weight of fructose (180 g/mol). Further, ginger bread contains a ground spice mix, comprising ground cinnamon, nutmeg, cloves, ginger and white pepper.

However, good results also have been achieved with a food product different from ginger bread, see e.g. Example 1.

In a further embodiment the baked food product is selected from waffles, in which sufficient water is present such that the starch is gelatinised during the baking process. Waffles preferably are made from a dough comprising cereal flour, in particular at least one flour selected from the group of rye flour and wheat flour. It should be noted that not all recipes for cookies biscuits, waffles and crackers require starch gelatinisation. The food products according to the invention comprise gelatinised starch though. Usually 50-100 % of the starch is gelatinised, preferably 60-100 wt. %, more preferably 75-100 %, in particular about 90-100 %.

In a further embodiment, the food product is a pancake.

The invention will now be illustrated by the following examples.

Example 1: cake

## 1.1 Cake preparation

The cake product was prepared according to the following recipe:

| Ingredients | Wt. % |
| --- | --- |
| Flour | 25.000 |
| Sucrose | 25.000 |
| Pasteurized whole eggs | 21.500 |
| Salt | 0.150 |
| Wheat starch | 2.000 |
| Sodium bicarbonate | 0.214 |
| SAPP 28 | 0.286 |

(continued)

| Ingredients | Wt. % |
|---|---|
| Margarine | 21.850 |
| Water | 4.000 |

A creaming method was used to prepare the batter. First, margarine, sucrose, salt, baking powders (i.e. sodium bicarbonate and sodium acid pyrophosphate (SAPP 28)) and the wheat starch were mixed together in an Hobart mixer using a whisk. Then eggs, water and glycerol were added and mixed. Finally, flour was added and mixed to achieve the final batter. Baking is performed at 180°C for 50 min for baking tins filled with 250 grams of batter.

After baking, cakes were left to cool down for 1 hour at room temperature and then individually sealed in plastic bags.

### 1.2 Sucrose replacement

For all cakes, a 30% sucrose reduction was tested by replacing 7.5% of the sucrose in the formulation with the same amount of polydextrose (Litesse II, Danisco), sorbitol and combinations thereof, FOS (Frutalose OFP, Sensus), glycerol and combinations thereof.

### 1.3 Storage and sampling

Packed cakes were stored at room temperature conditions for 1 week after baking. At day 7 after baking, cakes were removed from the packaging and analyzed.

### 1.4 Cake quality evaluation

#### 1.2.1 Volume measurements

Volume measurement of cake was performed by rapeseed displacement method (AACCI Method 10-05.01). Two cakes from each type of variation were analyzed

#### 1.2.2 Texture profile analysis of cake crumb

Cakes were sliced with a knife perpendicularly to their length. Slice thickness was 2 cm. From each slice, a cylinder of crumb of 3 cm diameter was taken out with a cylinder cutter with sharp edges. The crumb cylinder was then used for texture analysis. Crumb texture was determined by the texture analyser (SMS Texture Analyser Type HDi or XT2i, Ostfildern, Germany) with a load cell of 25 Kg, using the SMS P/75 aluminum platen probe. The crumb samples were subjected to a two-cycle compression test (texture profile analysis) with test speed of 2 mm s-1, penetration strain of 40% and post-test speed of 5 mm s-1. Crumb hardness and springiness were calculated from the force—time diagram, as indicated in Figure 1. Springiness provides information about the sample's recovery. From each cake variation, 3 crumb slices were taken out of 2 cakes, resulting in a total of 6 crumb samples per variation. Crumb hardness is F1 in Figure 1; springiness is t2/t1 in Figure 1.

#### 1.2.3 Crumb density

The weight of the crumb cylinder sample was recorded. Crumb density was then calculated as the ratio between the recorded weight and the volume. Volume was calculated based on the sample height (2 cm) and diameter (3 cm).

#### 1.2.4 Crumb water activity

Water activity was determined in duplicate using an Aqual Lab 4TE analyser which was calibrated using demi water and a calibration liquid with a water activity of 0.500. All measurements were performed at an ambient temperature of about 21°C.

### 1.5 Onset of starch gelatinization in batters

In order to assess the onset of starch gelatinization, cake batters were prepared as earlier described but without sodium bicarbonate and SAPP 28. Starch gelatinization in the cake batter samples was measured using a DSC Q2000 (TA Instruments, New Castle, USA). Samples were scanned from 2 to 150°C at a rate of 7.5°C/min. The onset of starch gelatinization was determined by analysis of the endothermic peak from the heat flow signal by using the automatic analysis tool available in the Universal Analysis software (TA instruments, New Castle, USA). Starch gelatinization onset temperatures were measured in duplicate for each variation.

## 1.6 Results of cake evaluation

*1.6.1 Sucrose replacement with polydextrose (comparative), sorbitol (comparative) or mixtures of polydextrose-sorbitol at various ratio's (supportive) .*

Replacing 30% sucrose with either sorbitol or polydextrose results in considerable deviations in terms of product quality (Table 1). By using sorbitol as replacer, the Mn of the bulk-carbohydrate mixtures (sucrose + bulk-carbohydrates replacing part of the sugar cf. to the original recipe) drops down to 271 g/mol. That results in an earlier gelatinization of starch during baking as compared to the sucrose reference. Therefore, the transition profile of the cake batter from a viscous liquid to a solid foam is considerably changed. The result of such early gelatinization is that the cake crumb is much denser and the crumb hardness higher than the sucrose reference.

By using polydextrose as sucrose replacer, the Mn of the bulk-carbohydrate mixture increases to 400 g/mol. As a result, the gelatinization of starch occurs at higher temperature compared to the sucrose reference. Therefore, the transition of the cake batter from a viscous liquid to a solid foam occurs later in the baking process. The resulting cake has a much softer crumb and springiness than the sucrose reference.

Overall, the use of either sorbitol or polydextrose results in considerable deviations in the textural properties of the cake crumb as well as its structure, i.e. density, as compared to the sucrose reference. Therefore, the replacement is not considered optimal.

Table 1 30% sucrose replacement with either polydextrose or sorbitol

| Sugars | Sucrose-Reference | Sorbitol-replaced | Polydextrose-replaced |
|---|---|---|---|
| Polydextrose (%) | | | 7,5 |
| Sorbitol (%) | | 7,5 | |
| Sucrose (%) | 25 | 17,5 | 17,5 |
| Mn bulk-carbohydrate mixture (g/mol) | 342 | 271 | 400 |
| Starch gelatinization onset temperature (°C) | 87.8 | 86.2 | 89.4 |
| **Cake quality evaluation** | | | |
| crumb aw | 0.821 | 0.818 | 0.828 |
| Crumb hardness (N) | 8.6 | 9.5 | 6.7 |
| Crumb springiness | 0.645 | 0.597 | 0.503 |
| Crumb density (g/mL) | 0.332 | 0.365 | 0.348 |

The baking quality of a 30% sucrose replaced cake can be optimized when a mixture of polydextrose and sorbitol are used in combination (Table 2) rather than alone. In fact, by combining the two sugar replacers, the Mn of the total of sucrose plus replacement bulk-carbohydrates can be optimized in order to simulate the starch gelatinization behavior as in the sucrose reference.

When the bulk-carbohydrate mixture is formulated with a Mn of 300 (g/mol), starch gelatinization occurs earlier than in the sucrose reference. The result is a lower volume than for the reference. Increasing the Mn of the bulk-carbohydrate mixture up to 380 (g/mol), an increase in volume is observed due to the increase in the temperature of transition of the cake batter from a viscous liquid to a solid foam.

The textural properties of the cake also change as function of the Mn of the mixture. Contrary to what observed for volume, textural properties are inversely proportional to Mn. In fact, crumb hardness and springiness decrease with increasing Mn.

Overall, choosing a polydextrose-sorbitol mixture with a Mn around 342 (g/mol) provided the best balance in achieving a cake volume with good volume while limiting textural deviations from the sucrose reference.

The use of a polydextrose-sorbitol mixture at an Mn of 342 g/mol clearly provides much better cake quality than either polydextrose or sorbitol alone.

Table 2. 30% sucrose replacement with mixtures of polydextrose and sorbitol with varying Mn

| Sugars | Sucrose-Reference | Mixture 1 | Mixture 2 | Mixture 3 |
|---|---|---|---|---|
| Polydextrose (%) | | 2,27 | 4,84 | 6,67 |
| Sorbitol (%) | | 5,23 | 2,66 | 0,83 |
| Sucrose (%) | 25 | 17,5 | 17,5 | 17,5 |
| Mn bulk-carbohydrate mixture (g/mol) | 342 | 300 | 342 | 380 |
| **Cake quality evaluation** | | | | |
| Volume (mL) | 562,5 | 525 | 537,5 | 575 |
| Crumb hardness (N) | 7,7 | 7,8 | 7,2 | 6,8 |
| Crumn springiness | 0,629 | 0,579 | 0,534 | 0,496 |
| crumb aw | 0,816 | 0,811 | 0,817 | 0,816 |

*1.6.2 Sucrose replacement with FOS (comparative), glycerol (comparative) or a mixture of FOS and glycerol (claimed)*

Replacing 30% sucrose with either FOS or glycerol results in considerable deviations in terms of product quality (Table 3). By using FOS as replacer, the Mn of the sugar mixtures rises to 396 g/mol. The resulting cake has lower crumb hardness and springiness as compared to the reference.

By using glycerol as replacer, the Mn of the sugar mixtures drops down to 188 g/mol. The resulting cake shows a considerably higher crumb hardness and springiness than the reference. Also the crumb density is much higher.

Cake quality is considerably improved when the sugar replacers are combined to achieve an Mn close to that of the reference. In fact, by combining FOS and glycerol to achieve a Mn of the total sugar mixture of 337 (g/mol), cake crumb hardness, springiness and density became similar to those of the reference cake (Table 3).

Table 3. 30% sucrose replacement with FOS, glycerol and a mixture thereof resulting in variation in Mn

| Sugars | Sucrose-Reference | FOS-glycerol | FOS-replaced | Glycerol-replaced |
|---|---|---|---|---|
| Sucrose | 25,0% | 17,5% | 17,5% | 17,5% |
| FOS | | 6,3% | 7,5% | |
| Glycerol | | 1,2% | | 7,5% |
| Mn bulk-carbohydrate mixture (g/mol) | 342 | 337 | 396 | 188 |
| **Cake quality evaluation** | | | | |
| crumb aw | 0,821 | 0,813 | 0,828 | 0,786 |
| Crumb hardness (N) | 8,6 | 8,3 | 8,0 | 11,7 |
| Crumn springiness | 0,645 | 0,622 | 0,559 | 0,662 |
| Crumb density (g/mL) | 0,332 | 0,334 | 0,332 | 0,390 |

In another test, a cake was made and tested wherein the effect of 30 % sucrose replacement with FOS, sorbitol or a mixture of sucrose, FOS and sorbitol (the mixture of sucrose, FOS and sorbitol having an Mn of about 342 g/mol) was evaluated. Similar results were obtained as with the cake comprising sucrose, FOS and glycerol.

In another test, a conventional recipe for a resilient bread product containing fructose syrup (55 wt. % based on dry weight) was reformulated, wherein fructose syrup was at least substantially replaced by a combination of FOS and one or two polyols (xylitol and/or glycerol) having an Mn of 200 g/mol. The sensory results were similar as for a conventional reference product made with fructose syrup.

Example 2 determination of extent of gelatinization

The extent of starch gelatinization is determined by analysing the amount of gelatinizable starch before the heating step in the dough or batter and in the final product. An amount of water is added resulting in a final moisture content of 60% on wet base to the dough/batter respectively final product in order to obtain full gelatinization of the ungelatinized/partially gelatinized starches present during heating in the DSC. The DSC experiment is performed in the range of about 20°C to 160°C. The DSC analysis of the dough/batter delivers the heat of gelatinization of all native starch in the dough, and remaining gelatinization in the final product, respectively. It is noted that, according to Fessas and Schiraldi (Starch gelatinization kinetics in bread dough, J. Thermal Anal. and Calorimetry, 61 (2000) 411-423), the effects of other components in the dough, like e.g. gluten, give neglible contributions to the DSC signal. The heat flow profiles generally show broad transitions and, at the moisture level indicated, are composed of two main peaks in the range about 40°C up till about 130°C. The first peak at the lower temperature relates to the gelatinization of starch, while the last peak, generally above 100°C, is related to the amylose-lipid complex. The areas of the first peak relates to the amount of starch gelatinized during heating in the DSC and are recalculated in terms of Joules (or Calories) per gram dry starch in the dough/batter resp. product plus added water as present in the DSC cup. Subtracting the rest heat of gelatinization found in the final product from the heat of gelatinization obtained from the dough/batter quantifies the amount of gelatinization, in Joules (Calories) per gram starch, that took place during the heating step in the production process, e.g. during baking in an oven.

In relation to the present work the part the starch gelatinized should, by the method discussed, preferably delivers values of about 6.5 J/g dry base of starch (corresponding to a gelatinization degree of about 60 %) or higher.

**Claims**

1. Method for preparing a baked food product comprising starch of which the preparation comprises a heating step wherein at least part of the starch is gelatinised, comprising

   - providing a dough or batter comprising at least 10 wt. % starch based on total dry matter, water and at least a first bulk-carbohydrate other than sucrose and a second bulk-carbohydrate other than sucrose *(bulk-carbohydrates being carbohydrates that are at least substantially soluble in water and typically being molecules having a degree of polymerisation in the range of 1-15)*, the first bulk-carbohydrate having a lower molecular weight than sucrose *(the molecular weight of sucrose being 342.30 g/mol)* and which first bulk carbohydrate is selected from the group consisting of glycerol (E422), erythritol (E 968), xylitol (E 967), sorbitol (E 420) and mannitol (E 421), the second bulk-carbohydrate having a higher molecular weight than sucrose and which second bulk carbohydrate is an oligosaccharide selected from the group consisting of polydextrose and fructooligosacharide (FOS), wherein the total of bulk-carbohydrates in the dough or batter has a number average molecular weight in the range of 250-400 g/mol, and wherein the sugar content is 0-90 wt. % based on total bulk-carbohydrates; and
   - subjecting the starch in the dough or batter to a gelatinization treatment in the presence of the bulk-carbohydrates, by heating the dough or batter to a temperature at or above the gelatinization temperature of the starch and allowing at least part of the starch to gelatinise.

2. Method according to claim 1, wherein the sugar content is 5-80 wt. %, based on total bulk carbohydrates, in particular 10-70 wt. % based on total bulk carbohydrates.

3. Method according to any of the preceding claims, wherein the at least second bulk-carbohydrate having a higher molecular weight than sucrose is selected from the group of oligosaccharides having a number average molecular weight in the range of about 450 to about 1800 g/mol.

4. Method according to any of the preceding claims, wherein a dough or batter is provided comprising glycerol.

5. Method according to any of the preceding claims, wherein the bulk-carbohydrate content is as follows:

   - 0-75 wt. %, preferably 5-40 wt. % sugars, based on total bulk-carbohydrate
   - 3-50 wt. %, in particular 5-40 wt. %, preferably 10-25 wt. % polyols having a molecular weight of less than 200 g/mol, based on total bulk-carbohydrate 3-97 wt. %, in particular 10-95 wt. %, preferably 20-50 wt. % oligosaccharides (which may include water soluble fibre), the bulk-carbohydrate content preferably being as follows:
   - 5-75 wt. %, preferably 5-40 wt. % sugars, based on total bulk-carbohydrate
   - 5-40 wt. %, preferably 10-25 wt. % polyols having a molecular weight of less than 200 g/mol, based on total bulk-carbohydrate
- 10-95 wt. %, preferably 20-50 wt. % oligosaccharides (which may include water soluble fibre).

6. Method according to any of the preceding claims, wherein at least a substantial part of the starch is cereal starch provided by cereal flour, in particular wheat flour or rye flour.

7. Method according to any of the preceding claims, wherein the total of bulk-carbohydrates in the dough or batter has a number average molecular weight in the range of 250-390 g/mol.

8. Method according to claim 7 wherein the total of bulk-carbohydrates in the dough or batter has a number average molecular weight in the range of 250-360 g/mol.

9. Method according to any of the preceding claims, wherein 50-100 % of the starch is gelatinised, preferably 90-100 % of the starch is gelatinised.

10. Dough or batter suitable for preparing a starch-containing food product, which food product is a baked food product of which the preparation comprises a heating step wherein at least part of starch is gelatinised, the dough or batter comprising at least 10 wt. % starch, based on total dry weight, at least a first bulk-carbohydrate other than sucrose and a second bulk-carbohydrate other than sucrose, the first bulk-carbohydrate having a lower molecular weight than sucrose and which bulk carbohydrate is selected from the group consisting of glycerol (E422), erythritol (E 968), xylitol (E 967), sorbitol (E 420) and mannitol (E 421), the second bulk-carbohydrate having a higher molecular weight than sucrose and which second bulk carbohydrate is an oligosaccharide selected from the group consisting of polydextrose and fructooligosacharide (FOS), wherein the total of bulk-carbohydrates in the dough or batter has a number average molecular weight in the range of 250-400 g/mol, said dough or batter having a sugar content of 0-90 wt. %, preferably of 5-80 wt. %, in particular of 10-70 wt. %, based on total weight of bulk-carbohydrates the total of bulk-carbohydrates in the dough or batter.

11. Dough or batter according to claim 10 wherein the total of bulk-carbohydrates in the dough or batter has a number average molecular weight in the range of 250-390 g/mol.

12. Dough or batter according to claim 11 wherein the total of bulk-carbohydrates in the dough or batter is in the range of 250-360 g/mol.

13. Dough or batter according to claim 11 or 12 wherein the dough or batter contains at least about 0.8 g water per gram starch.

14. Baked food product of which the preparation comprises a heating step wherein starch is gelatinised - which food product is obtainable by a method according to claim 1 or any of the claims 2-9 dependent on claim 1 or which food product has been made from a dough or batter according to any of the claims 10-13 - the food product comprising at least 10 wt. % starch, based on the total dry weight of the product, the product further comprising at least a first bulk-carbohydrate other than sucrose and a second bulk-carbohydrate other than sucrose *(bulk-carbohydrates being carbohydrates that are at least substantially soluble in water and typically being molecules having a degree of polymerisation in the range of 1-15),* the first bulk-carbohydrate having a lower molecular weight than sucrose and which first bulk carbohydrate is selected from the group consisting of glycerol (E422), erythritol (E 968), xylitol (E 967), sorbitol (E 420) and mannitol (E 421), the second bulk-carbohydrate having a higher molecular weight than sucrose and which second bulk carbohydrate is an oligosaccharide selected from the group consisting of polydextrose and fructooligosacharide (FOS), the number average molecular weight of the total of bulk-carbohydrates being in the range of 250-400 g/mol, the product having a sugar content of 0-90 wt. %, preferably of 5-80 wt. %, in particular of 10-70 wt. %, based on total weight of bulk-carbohydrates.

15. Baked food product according to claim 14 comprising at least a second bulk-carbohydrate other than sugars selected from the group of oligosaccharides having a number average molecular weight in the range of 350-2000 g/mol, in particular in the range of 450-1800 g/mol.

16. Baked food product according to claim 14 or 15 wherein the food product is a product selected from the group of breads; cakes; waffles; and pan cakes.

17. Baked food product according to claim 16 wherein the food product is a cake.

**18.** Baked food product according to any of the claims 14-17 wherein the total of bulk-carbohydrates in the dough or batter has a number average molecular weight in the range of 250-390 g/mol.

**19.** Baked food product according to claim 18 wherein the total of bulk-carbohydrates has a number average molecular weight in the range of 250-360 g/mol.

**20.** Use of a combination of at least a first bulk-carbohydrate other than sucrose, selected from the group of glycerol (E422), erythritol (E 968), xylitol (E 967), sorbitol (E 420) and mannitol (E 421) and at least a second bulk-carbohydrate other than sucrose selected from the group of oligosaccharides having a number average molecular weight in the range of 350-2000 g/mol selected from the group of fructooligosaccharide and polydextrose, the combination of bulk-carbohydrates other than sugars having a number average molecular weight in the range of 250-400 g/mol, in particular in the range of 250-360 g/mol, more in particular in the range of 300-350 g/mol as a sugar replacer, a sweetener or a bulking agent in a baked food product, wherein the food product is selected from the group of cakes, breads, waffles and pan cakes.

**21.** Use according to claim 20, wherein the combination comprises glycerol and a second bulk carbohydrate selected from the group consisting of polydextrose and fructooligosaccharide.

**Patentansprüche**

**1.** Verfahren zum Herstellen eines gebackenen Lebensmittelprodukts, umfassend Stärke, deren Herstellung einen Erhitzungsschritt umfasst, wobei wenigstens ein Teil der Stärke geliert wird, umfassend

- Bereitstellen eines Teigs oder Backteigs, umfassend wenigstens 10 Gew.-% Stärke, basierend auf der Gesamttrockensubstanz, Wasser und wenigstens ein erstes Massenkohlenhydrat, anders als Saccharose, und ein zweites Massenkohlenhydrat, anders als Saccharose *(Massenkohlenhydrate sind Kohlenhydrate, die wenigstens im Wesentlichen in Wasser löslich sind und typischerweise Moleküle mit einem Polymerisationsgrad in dem Bereich von 1-15 sind),* das erste Massenkohlenhydrat mit einem geringeren Molekulargewicht als Saccharose *(das Molekulargewicht von Saccharose ist 342,30 g/mol)* und wobei das erste Massenkohlenhydrat ausgewählt ist aus der Gruppe, bestehend aus Glycerin (E 422), Erythrit (E 968), Xylit (E 967), Sorbit (E 420) und Mannit (E 421), das zweite Massenkohlenhydrat mit einem höheren Molekulargewicht als Saccharose und wobei das zweite Massenkohlenhydrat ein Oligosaccharid ist, ausgewählt aus der Gruppe, bestehend aus Polydextrose und Fructooligosacharid (FOS), wobei die Gesamtheit von Massenkohlenhydraten in dem Teig oder Backteig ein zahlenmittleres Molekulargewicht in dem Bereich von 250-400 g/mol hat, und wobei der Zuckergehalt 0-90 Gew.-%, basierend auf der Gesamtheit von Massenkohlenhydraten, ist; und
- Unterziehen der Stärke in dem Teig oder dem Backteig einer Gelatinisierungsbehandlung in der Gegenwart der Massenkohlenhydrate durch Erhitzen des Teigs oder Backteigs auf eine Temperatur von oder über der Gelatinisierungstemperatur der Stärke und Ermöglichen wenigstens einem Teil der Stärke zu gelieren.

**2.** Verfahren nach Anspruch 1, wobei der Zuckergehalt 5-80 Gew.-%, basierend auf der Gesamtheit von Massenkohlenhydraten, insbesondere 10-70 Gew.-%, basierend auf der Gesamtheit von Massenkohlenhydraten, ist.

**3.** Verfahren nach einem der vorhergehenden Ansprüche, wobei das wenigstens zweite Massenkohlenhydrat mit einem höheren Molekulargewicht als Saccharose ausgewählt ist aus der Gruppe von Oligosachariden mit einem zahlenmittleren Molekulargewicht in dem Bereich von ungefähr 450 bis ungefähr 1800 g/mol.

**4.** Verfahren nach einem der vorhergehenden Ansprüche, wobei ein Teig oder Backteig bereitgestellt wird, umfassend Glycerin.

**5.** Verfahren nach einem der vorhergehenden Ansprüche, wobei der Massenkohlenhydratgehalt wie folgt ist:

- 0-75 Gew.-%, vorzugsweise 5-40 Gew.-% Zucker, basierend auf der Gesamtheit von Massenkohlenhydrat
- 3-50 Gew.-%, insbesondere 5-40 Gew.-%, vorzugsweise 10-25 Gew.-% Polyole mit einem Molekulargewicht von weniger als 200 g/mol, basierend auf der Gesamtheit von Massenkohlenhydrat
3-97 Gew.-%, insbesondere 10-95 Gew.-%, vorzugsweise 20-50 Gew.-% Oligosaccharide (die wasserlösliche Ballaststoffe einschließen können), wobei der Massenkohlenhydratgehalt vorzugsweise wie folgt ist:

- 5-75 Gew.-%, vorzugsweise 5-40 Gew.-% Zucker, basierend auf der Gesamtheit von Massenkohlenhydraten

- 5-40 Gew.-%, vorzugsweise 10-25 Gew.-% Polyole mit einem Molekulargewicht von weniger als 200 g/mol, basierend auf der Gesamtheit von Massenkohlenhydraten

- 10-95 Gew.-%, vorzugsweise 20-50 Gew.-% Oligosaccharide (die wasserlösliche Ballaststoffe einschließen können).

6. Verfahren nach einem der vorhergehenden Ansprüche, wobei wenigstens ein wesentlicher Teil der Stärke Getreidestärke ist, bereitgestellt von Getreidemehl, insbesondere Weizenmehl oder Roggenmehl.

7. Verfahren nach einem der vorhergehenden Ansprüche, wobei die Gesamtheit von Massenkohlenhydraten in dem Teig oder Backteig ein zahlenmittleres Molekulargewicht in dem Bereich von 250-390 g/mol hat.

8. Verfahren nach Anspruch 7, wobei die Gesamtheit von Massenkohlenhydraten in dem Teig oder Backteig ein zahlenmittleres Molekulargewicht in dem Bereich von 250-360 g/mol hat.

9. Verfahren nach einem der vorhergehenden Ansprüche, wobei 50-100 % der Stärke geliert wird, vorzugsweise 90-100 % der Stärke geliert wird.

10. Teig oder Backteig, geeignet zum Herstellen eines stärkehaltigen Lebensmittelprodukts, wobei das Lebensmittelprodukt ein gebackenes Lebensmittelprodukt ist, dessen Herstellung einen Erhitzungsschritt umfasst, wobei wenigstens ein Teil der Stärke geliert wird, der Teig oder Backteig umfassend wenigstens 10 Gew.-% Stärke, basierend auf dem Gesamttrockengewicht, wenigstens ein erstes Massenkohlenhydrat, anders als Saccharose, und ein zweites Massenkohlenhydrat, anders als Saccharose, das erste Massenkohlenhydrat mit einem geringeren Molekulargewicht als Saccharose und wobei das Massenkohlenhydrat ausgewählt ist aus der Gruppe, bestehend aus Glycerin (E 422), Erythrit (E 968), Xylit (E 967), Sorbit (E 420) und Mannit (E 421), das zweite Massenkohlenhydrat mit einem höheren Molekulargewicht als Saccharose und wobei das zweite Massenkohlenhydrat ein Oligosaccharid ist, ausgewählt aus der Gruppe, bestehend aus Polydextrose und Fructooligosacharid (FOS), wobei die Gesamtheit von Massenkohlenhydraten in dem Teig oder Backteig ein zahlenmittleres Molekulargewicht in dem Bereich von 250-400 g/mol hat, der Teig oder Backteig mit einen Zuckergehalt von 0-90 Gew.-%, vorzugsweise von 5-80 Gew.-%, insbesondere von 10-70 Gew.-%, basierend auf dem Gesamtgewicht von Massenkohlenhydraten der Gesamtheit von Massenkohlenhydraten in dem Teig oder Backteig.

11. Teig oder Backteig nach Anspruch 10, wobei die Gesamtheit von Massenkohlenhydraten in dem Teig oder Backteig ein zahlenmittleres Molekulargewicht in dem Bereich von 250-390 g/mol hat.

12. Teig oder Backteig nach Anspruch 11, wobei die Gesamtheit von Massenkohlenhydraten in dem Teig oder Backteig in dem Bereich von 250-360 g/mol ist.

13. Teig oder Backteig nach Anspruch 11 oder 12, wobei der Teig oder Backteig wenigstens ungefähr 0,8 g Wasser pro Gramm Stärke enthält.

14. Gebackenes Lebensmittelprodukt, dessen Herstellung einen Erhitzungsschritt umfasst, wobei die Stärke geliert wird - wobei das Lebensmittelprodukt durch ein Verfahren nach Anspruch 1 oder nach einem derAnsprüche 2 bis 9, abhängig von Anspruch 1, erhältlich ist, oder wobei das Lebensmittelprodukt aus einem Teig oder Backteig nach einem der Ansprüche 10 bis 13 hergestellt worden ist - das Lebensmittelprodukt umfassend wenigstens 10 Gew.-%. Stärke, basierend auf dem Gesamttrockengewicht des Produkts, das Produkt ferner umfassend wenigstens ein erstes Massenkohlenhydrat, anders als Saccharose, und ein zweites Massenkohlenhydrat, anders als Saccharose *(Massenkohlenhydrate sind Kohlenhydrate, die wenigstens im Wesentlichen in Wasser löslich sind und typischerweise Moleküle mit einem Polymerisationsgrad im Bereich von 1-15 sind),* das erste Massenkohlenhydrat mit einem geringeren Molekulargewicht als Saccharose und wobei das erste Massenkohlenhydrat ausgewählt ist aus der Gruppe, bestehend aus Glycerin (E422) Erythrit (E 968), Xylit (E 967), Sorbit (E 420) und Mannit (E 421), das zweite Massenkohlenhydrat mit einem höheren Molekulargewicht als Saccharose und wobei das zweite Massenkohlenhydrat ein Oligosaccharid ist, ausgewählt aus der Gruppe, bestehend aus Polydextrose und Fructooligosacharid (FOS), wobei das zahlenmittlere Molekulargewicht der Gesamtheit von Massenkohlenhydraten in dem Bereich von 250-400 g/mol ist, das Produkt mit einem Zuckergehalt von 0-90 Gew.-%, vorzugsweise von 5-80 Gew.-%, insbesondere von 10-70 Gew.-%, basierend auf dem Gesamtgewicht von Massenkohlenhydraten.

**15.** Gebackenes Lebensmittelprodukt nach Anspruch 14, umfassend wenigstens ein zweites Massenkohlenhydrat, anders als Zucker, ausgewählt aus der Gruppe von Oligosacchariden mit einem zahlenmittleren Molekulargewicht in dem Bereich von 350-2000 g/mol, insbesondere in dem Bereich von 450-1800 g/mol.

**16.** Gebackenes Lebensmittelprodukt nach Anspruch 14 oder 15, wobei das Lebensmittelprodukt ein Produkt ist, ausgewählt aus der Gruppe von Broten; Kuchen; Waffeln; und Pfannenkuchen.

**17.** Gebackenes Lebensmittelprodukt nach Anspruch 16, wobei das Lebensmittelprodukt ein Kuchen ist.

**18.** Gebackenes Lebensmittelprodukt nach einem der Ansprüche 14 - 17, wobei die Gesamtheit von Massenkohlenhydraten in dem Teig oder der Backteig ein zahlenmittleres Molekulargewicht in dem Bereich von 250-390 g/mol hat.

**19.** Gebackenes Lebensmittelprodukt nach Anspruch 18, wobei die Gesamtheit von Massenkohlenhydraten ein zahlenmittleres Molekulargewicht in dem Bereich von 250-360 g/mol hat.

**20.** Verwendung einer Kombination von wenigstens einem ersten Massenkohlenhydrat, anders als Saccharose, ausgewählt aus der Gruppe von Glycerin (E 422), Erythrit (E 968), Xylit (E 967), Sorbit (E 420) und Mannit (E 421), und wenigstens einem zweiten Massenkohlenhydrat, anders als Saccharose, ausgewählt aus der Gruppe von Oligosacchariden, mit einem zahlenmittleren Molekulargewicht in dem Bereich von 350-2000 g/mol, ausgewählt aus der Gruppe von Fructooligosaccharid und der Polydextrose, die Kombination von Massenkohlenhydraten, anders als Zucker, mit einem zahlenmittleren Molekulargewicht in dem Bereich von 250-400 g/mol, insbesondere in dem Bereich von 250-360 g/mol, besonderer in dem Bereich von 300-350 g/mol, als ein Zuckerersatz, ein Süßungsmittel oder ein Füllmittel in einem gebackenen Lebensmittelprodukt, wobei das Lebensmittelprodukt ausgewählt ist aus der Gruppe von Kuchen, Broten, Waffeln und Pfannenkuchen.

**21.** Verwendung nach Anspruch 20, wobei die Kombination Glycerin und ein zweites Massenkohlenhydrat umfasst, ausgewählt aus der Gruppe bestehend aus Polydextrose und Fructooligosaccharid.

## Revendications

**1.** Procédé de préparation d'un produit alimentaire de boulangerie comprenant de l'amidon dont la préparation comprend une étape de chauffage dans laquelle au moins une partie de l'amidon est gélatinisée, comprenant

- la fourniture d'un pâton ou d'une pâte comprenant au moins 10 % en masse d'amidon sur la base de matière sèche totale, de l'eau et au moins un premier carbohydrate volumineux différent du saccharose et un second carbohydrate volumineux différent du saccharose *(les carbohydrates volumineux étant des carbohydrates qui sont au moins substantiellement solubles dans l'eau et étant typiquement des molécules ayant un degré de polymérisation dans l'intervalle de 1-15),* le premier carbohydrate volumineux ayant une masse moléculaire inférieure au saccharose *(la masse moléculaire du saccharose étant de 342,30 g/mol)* et lequel premier carbohydrate volumineux est choisi dans le groupe consistant en glycérol (E422), érythritol (E 968), xylitol (E 967), sorbitol (E 420) et mannitol (E 421), le second carbohydrate volumineux ayant une masse moléculaire supérieure au saccharose et lequel second carbohydrate volumineux est un oligosaccharide choisi dans le groupe consistant en polydextrose et fructooligosaccharide (FOS), dans lequel le total des carbohydrates volumineux dans le pâton ou la pâte présente une masse moléculaire moyenne en nombre dans l'intervalle de 250-400 g/mol, et dans lequel la teneur en sucre est de 0-90 % en masse sur la base du total des carbohydrates volumineux ; et
- la soumission de l'amidon dans le pâton ou la pâte à un traitement de gélatinisation en présence des carbohydrates volumineux, par chauffage du pâton ou de la pâte à une température de ou supérieure à la température de gélatinisation de l'amidon et le laisser au moins une partie de l'amidon gélatiniser.

**2.** Procédé selon la revendication 1, dans lequel la teneur en sucre est de 5-80 % en masse sur la base du total des carbohydrates volumineux, en particulier 10-70 % en masse sur la base du total des carbohydrates volumineux.

**3.** Procédé selon l'une quelconque des revendications précédentes, dans lequel le au moins un second carbohydrate volumineux ayant une masse moléculaire supérieure au saccharose est choisi dans le groupe d'oligosaccharides ayant une masse moléculaire moyenne en nombre dans l'intervalle d'environ 450 à environ 1 800 g/mol.

**4.** Procédé selon l'une quelconque des revendications précédentes, dans lequel un pâton ou une pâte est fourni en comprenant du glycérol.

5. Procédé selon l'une quelconque des revendications précédentes, dans lequel la teneur en carbohydrate volumineux est la suivante :

- 0-75 % en masse, de préférence 5-40 % en masse de sucres, sur la base du total des carbohydrates volumineux
- 3-50 % en masse, en particulier 5-40 % en masse, de préférence 10-25 % en masse de polyols ayant une masse moléculaire inférieure à 200 g/mol, sur la base du total des carbohydrates volumineux
- 3-97 % en masse, en particulier 10-95 % en masse, de préférence 20-50 % en masse d'oligosaccharides (lesquels peuvent inclure de la fibre soluble dans l'eau), la teneur en carbohydrate volumineux étant de préférence la suivante :
- 5-75 % en masse, de préférence 5-40 % en masse de sucres, sur la base du total des carbohydrates volumineux
- 5-40 % en masse, de préférence 10-25 % en masse de polyols ayant une masse moléculaire inférieure à 200 g/mol, sur la base du total des carbohydrates volumineux
- 10-95 % en masse, de préférence 20-50 % en masse d'oligosaccharides (lesquels peuvent inclure de la fibre soluble dans l'eau).

6. Procédé selon l'une quelconque des revendications précédentes, dans lequel au moins une partie substantielle de l'amidon est de l'amidon de céréale fourni par de la farine de céréale, en particulier de la farine de blé ou farine de seigle.

7. Procédé selon l'une quelconque des revendications précédentes, dans lequel le total des carbohydrates volumineux dans le pâton ou la pâte présente une masse moléculaire moyenne en nombre dans l'intervalle de 250-390 g/mol.

8. Procédé selon la revendication 7, dans lequel le total des carbohydrates volumineux dans le pâton ou la pâte présente une masse moléculaire moyenne en nombre dans l'intervalle de 250-360 g/mol.

9. Procédé selon l'une quelconque des revendications précédentes, dans lequel 50-100 % de l'amidon sont gélatinisés, de préférence 90-100 % de l'amidon sont gélatinisés.

10. Pâton ou pâte approprié pour préparer un produit alimentaire contenant de l'amidon, lequel produit alimentaire est un produit alimentaire de boulangerie dont la préparation comprend une étape de chauffage dans laquelle au moins une partie de l'amidon est gélatinisée, le pâton ou la pâte comprenant au moins 10 % en masse d'amidon, sur la base de masse totale sèche, au moins un premier carbohydrate volumineux différent du saccharose et un second carbohydrate volumineux différent du saccharose, le premier carbohydrate volumineux ayant une masse moléculaire inférieure au saccharose et lequel carbohydrate volumineux est choisi dans le groupe consistant en glycérol (E422), érythritol (E 968), xylitol (E 967), sorbitol (E 420) et mannitol (E 421), le second carbohydrate volumineux ayant une masse moléculaire supérieure au saccharose et lequel second carbohydrate volumineux est un oligosaccharide choisi dans le groupe consistant en polydextrose et fructooligosaccharide (FOS), dans lequel le total des carbohydrates volumineux dans le pâton ou la pâte présente une masse moléculaire moyenne en nombre dans l'intervalle de 250-400 g/mol, ledit pâton ou ladite pâte ayant une teneur en sucre de 0-90 % en masse, de préférence de 5-80 % en masse, en particulier de 10-70 % en masse, sur la base de la masse totale des carbohydrates volumineux du total des carbohydrates volumineux dans le pâton ou la pâte.

11. Pâton ou pâte selon la revendication 10, dans lequel le total des carbohydrates volumineux dans le pâton ou la pâte présente une masse moléculaire moyenne en nombre dans l'intervalle de 250-390 g/mol.

12. Pâton ou pâte selon la revendication 11, dans lequel le total des carbohydrates volumineux dans le pâton ou la pâte se trouve dans l'intervalle de 250-360 g/mol.

13. Pâton ou pâte selon la revendication 11 ou 12, dans lequel le pâton ou la pâte contient au moins environ 0,8 g d'eau par gramme d'amidon.

14. Produit alimentaire de boulangerie dont la préparation comprend une étape de chauffage dans laquelle l'amidon est gélatinisé - lequel produit alimentaire peut être obtenu par un procédé selon la revendication 1 ou l'une quelconque des revendications 2-9 dépendant de la revendication 1 ou lequel produit alimentaire a été fabriqué à partir d'un pâton ou d'une pâte selon l'une quelconque des revendications 10-13 - le produit alimentaire comprenant au moins 10 % en masse d'amidon, sur la base de masse sèche totale du produit, le produit comprenant de plus au moins un premier carbohydrate volumineux différent du saccharose et un second carbohydrate volumineux différent du saccharose *(les carbohydrates volumineux étant des carbohydrates qui sont au moins substantiellement solubles dans l'eau et étant typiquement des molécules ayant un degré de polymérisation dans l'intervalle de 1-15),* le premier carbohydrate volumineux ayant une masse moléculaire inférieure au saccharose et lequel premier carbohydrate volumineux est choisi dans le groupe consistant en glycérol (E422), érythritol (E 968), xylitol (E 967), sorbitol (E 420) et mannitol (E 421), le second carbohydrate volumineux ayant une masse moléculaire supérieure au saccharose et lequel second carbohydrate volumineux est un oligosaccharide choisi dans le groupe consistant en polydextrose et fructooligosaccharide (FOS), la masse moléculaire moyenne en nombre du total des carbohydrates volumineux étant dans l'intervalle de 250-400 g/mol, le produit ayant une teneur en sucre de 0-90 % en masse, de préférence de 5-80 % en masse, en particulier de 10-70 % en masse, sur la base de la masse totale des carbohydrates volumineux.

15. Produit alimentaire de boulangerie selon la revendication 14 comprenant au moins un second carbohydrate volumineux différent de sucres choisis dans le groupe d'oligosaccharides ayant une masse moléculaire moyenne en nombre dans l'intervalle de 350-2 000 g/mol, en particulier dans l'intervalle de 450-1 800 g/mol.

16. Produit alimentaire de boulangerie selon la revendication 14 ou 15, dans lequel le produit alimentaire est un produit choisi dans le groupes des pains ; gâteaux ; gaufres ; et crêpes.

17. Produit alimentaire de boulangerie selon la revendication 16, dans lequel le produit alimentaire est un gâteau.

18. Produit alimentaire de boulangerie selon l'une quelconque des revendications 14-17, dans lequel le total des carbohydrates volumineux dans le pâton ou la pâte présente une masse moléculaire moyenne en nombre dans l'intervalle de 250-390 g/mol.

19. Produit alimentaire de boulangerie selon la revendication 18, dans lequel le total des carbohydrates volumineux présente une masse moléculaire moyenne en nombre dans l'intervalle de 250-360 g/mol.

20. Utilisation d'une combinaison d'au moins un premier carbohydrate volumineux différent du saccharose, choisi dans le groupe de glycérol (E422), érythritol (E 968), xylitol (E 967), sorbitol (E 420) et mannitol (E 421) et d'au moins un second carbohydrate volumineux différent du saccharose choisi dans le groupe d'oligosaccharides ayant une masse moléculaire moyenne en nombre dans l'intervalle de 350-2 000 g/mol choisis dans le groupe de fructooligosaccharide et polydextrose, la combinaison de carbohydrates volumineux différents de sucres ayant une masse moléculaire moyenne en nombre dans l'intervalle de 250-400 g/mol, en particulier dans l'intervalle de 250-360 g/mol, encore mieux dans l'intervalle de 300-350 g/mol comme un substitut du sucre, un édulcorant ou un agent gonflant dans un produit alimentaire de boulangerie, dans lequel le produit alimentaire est choisi dans le groupe des gâteaux, pains, gaufres et crêpes.

21. Utilisation selon la revendication 20, dans laquelle la combinaison comprend du glycérol et un second carbohydrate volumineux choisi dans le groupe consistant en polydextrose et fructooligosaccharide.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 511761 A
- US 2009202697 A
- EP 1817964 A1
- WO 2008082596 A2
- US 2005220961 A
- WO 2007001501 A

**Non-patent literature cited in the description**

- **MARTINEZ-CERVERA et al.** *LWT -Food Science and Technology,* 15 August 2011, vol. 45 (2), 213-220
- Starch gelatinization kinetics in bread dough. *J. Thermal Anal. and Calorimetry,* 2000, vol. 61, 411-423